# EUROPEAN PATENT APPLICATION

(11) **EP 4 819 590 A1**
(43) Date of publication of application: **07.10.2026**
(21) Application number: 24922424.7
(22) Date of filing: 04.12.2024
(51) Int. Cl.: H04M 1/20, H04M 1/72403, H04M 3/18, H04M 1/60, H04N 23/57

(54) **ELECTRONIC DEVICE, METHOD, AND NON-TRANSITORY COMPUTER-READABLE STORAGE MEDIUM FOR CONTROLLING FUNCTION RELATED TO CALL CONNECTION**

(30) Priority: 30.01.2024 KR 20240014438; 11.03.2024 KR 20240034176
(71) Applicant: Samsung Electronics Co., Ltd., Suwon-si, Gyeonggi-do 16677 (KR)
(72) Inventor: HEO, Seungyoon, Suwon-si, Gyeonggi-do 16677 (KR); KWAK, Sunjung, Suwon-si, Gyeonggi-do 16677 (KR); KIM, Choonho, Suwon-si, Gyeonggi-do 16677 (KR); BANG, Chaerim, Suwon-si, Gyeonggi-do 16677 (KR); SEO, Il, Suwon-si, Gyeonggi-do 16677 (KR); WOO, Sunghwa, Suwon-si, Gyeonggi-do 16677 (KR); LEE, Byounghee, Suwon-si, Gyeonggi-do 16677 (KR); JUNG, Hoon, Suwon-si, Gyeonggi-do 16677 (KR)
(74) Representative: Appleyard Lees IP LLP
(86) International application number: PCT/KR2024/019686
(87) International publication number: WO 2025/164915

(57) **Abstract**

According to an embodiment, a method performed by an electronic device may comprise an operation of establishing a call connection between the electronic device and at least one external electronic device through a communication circuit of the electronic device. The method may comprise an operation of transmitting, to the at least one external electronic device through the communication circuit, an audio signal to which a function for echo cancellation is applied, on the basis of acquiring the audio signal from a microphone of the electronic device, while the call connection is established. The method may comprise an operation of identifying a notification message generated from a software application executed for the call connection, while the function for echo cancellation is activated. The method may comprise an operation of deactivating the function for echo cancellation on the basis of identifying the notification message.

## Description

### [Technical Field]

The following descriptions relate to an electronic device, a method, and a non-transitory computer readable storage medium for controlling a function related to a call connection.

### [Background Art]

An electronic device may provide a service for transmitting and receiving an audio and video signal related to external electronic devices positioned at different positions for real-time communication. A user of the electronic device may communicate with other users positioned in different spaces by using the service.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device (e.g., an electronic device 210) may comprise a speaker (e.g., a speaker 212), a microphone (e.g., a microphone 213), communication circuitry (e.g., communication circuitry 214), memory storing instructions, and a processor (e.g., a processor 211). The instructions, when executed by the processor, may cause the electronic device to establish, through the communication circuitry, a call connection between the electronic device and at least one external electronic device. The instructions, when executed by the processor, may cause the electronic device to, while the call connection is established, transmit, based on obtaining an audio signal from the microphone, the audio signal to which a function for echo cancellation is applied to the at least one external electronic device through the communication circuitry. The instructions, when executed by the processor, may cause the electronic device to, while the function for echo cancellation is activated, identify a notification message generated from a software application executed for the call connection. The instructions, when executed by the processor, may cause the electronic device to, based on identifying the notification message, deactivate the function for echo cancellation.

According to an embodiment, a method performed by an electronic device may comprise establishing, through communication circuitry of the electronic device, a call connection between the electronic device and at least one external electronic device. The method may comprise, while the call connection is established, transmitting, based on obtaining an audio signal from a microphone of the electronic device, the audio signal to which a function for echo cancellation is applied to the at least one external electronic device through the communication circuitry. The method may comprise, while the function for echo cancellation is activated, identifying a notification message generated from a software application executed for the call connection. The method may comprise, based on identifying the notification message, deactivating the function for echo cancellation.

According to an embodiment, a non-transitory computer readable storage medium may store one or more programs. The one or more programs may comprise instructions which, when executed by a processor of an electronic device with a speaker, a microphone, and communication circuitry, cause the electronic device to establish, through the communication circuitry, a call connection between the electronic device and at least one external electronic device. The one or more programs may comprise instructions which, when executed by the processor, cause the electronic device to, while the call connection is established, transmit, based on obtaining an audio signal from the microphone, the audio signal to which a function for echo cancellation is applied to the at least one external electronic device through the communication circuitry. The one or more programs may comprise instructions which, when executed by the processor, cause the electronic device to, while the function for echo cancellation is activated, identify a notification message generated from a software application executed for the call connection. The one or more programs may comprise instructions which, when executed by the processor, cause the electronic device to, based on identifying the notification message, deactivate the function for echo cancellation.

### [Description of the Drawings]

FIG. 1 is a block diagram of an electronic device in a network environment according to an embodiment.
FIG. 2A illustrates an example of operations of an electronic device, at least one external electronic device, and a server when a call connection between the electronic device and the at least one external electronic device is performed for broadcasting of an audio signal or a video signal.
FIG. 2B is a simplified block diagram of an electronic device according to an embodiment.
FIG. 3 illustrates an example of operations of incoming signal processing circuitry and outgoing signal processing circuitry.
FIG. 4 is a flowchart related to an operation of an electronic device for deactivation of a function for echo cancellation.
FIG. 5 is a flowchart related to an operation of an electronic device for deactivation of a function for echo cancellation.
FIG. 6 illustrates an operation of an electronic device for deactivation of a function for echo cancellation.
FIG. 7 illustrates an operation of an electronic device for deactivation of a function for echo cancellation.
FIG. 8 is a flowchart related to an operation of an electronic device for deactivation of a function for echo cancellation.

### [Mode for Invention]

Hereinafter, an embodiment of the present disclosure is described in detail with reference to the drawings such that those having ordinary knowledge in the art to which the present disclosure belongs, may easily implement it. However, the present disclosure may be implemented in various different forms and is not limited to an embodiment described herein. Regarding descriptions of the drawings, the same or similar reference numerals may be used for the same or similar components. In addition, in the drawings and related descriptions, descriptions for well-known functions and configurations may be omitted for clarity and conciseness.

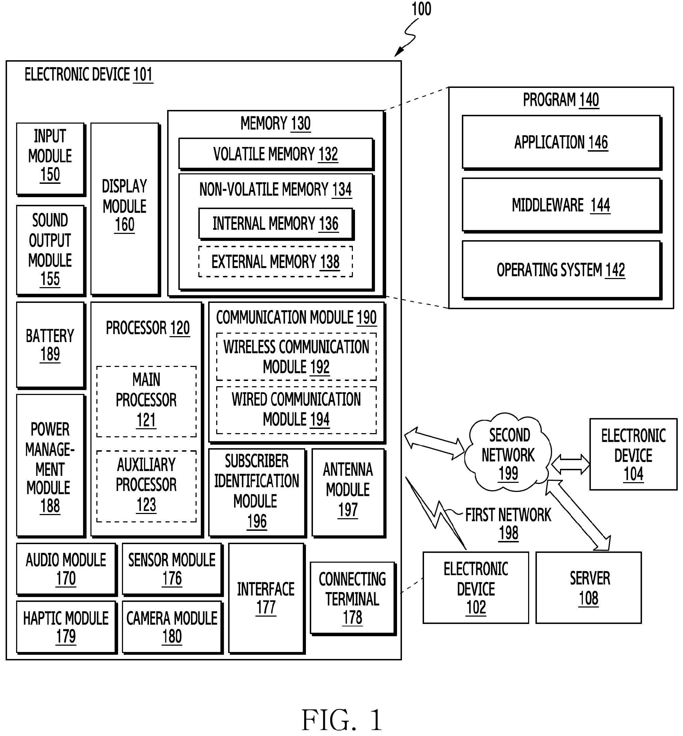

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

According to an embodiment, an electronic device (e.g., the electronic device 101 of FIG. 1) may establish a call connection with at least one external electronic device (e.g., the electronic device 102 or the electronic device 104 of FIG. 1) through a server (e.g., the server 108 of FIG. 1). While the call connection with the at least one external electronic device is established, the electronic device may output a first audio signal received from the at least one external electronic device by using a speaker. While the first audio signal received from the at least one external electronic device is output by using the speaker, the electronic device may obtain a second audio signal from a user of the electronic device by using a microphone of the electronic device. While the second audio signal is obtained, the first audio signal output through the speaker may also be obtained through the microphone. Accordingly, the electronic device may perform a function for echo cancellation in order to remove the first audio signal obtained through the microphone.

However, when the electronic device performs broadcasting for the at least one external electronic device through the server, the electronic device may not receive an audio signal (or a video signal) from the at least one external electronic device. When the audio signal (or the video signal) is not received from the at least one external electronic device, the function for echo cancellation may not need to be performed. Therefore, the electronic device may deactivate the function for echo cancellation according to whether the broadcasting is performed. In the following specification, a technical feature for identifying whether the broadcasting is performed in the electronic device and deactivating the function for echo cancellation will be described.

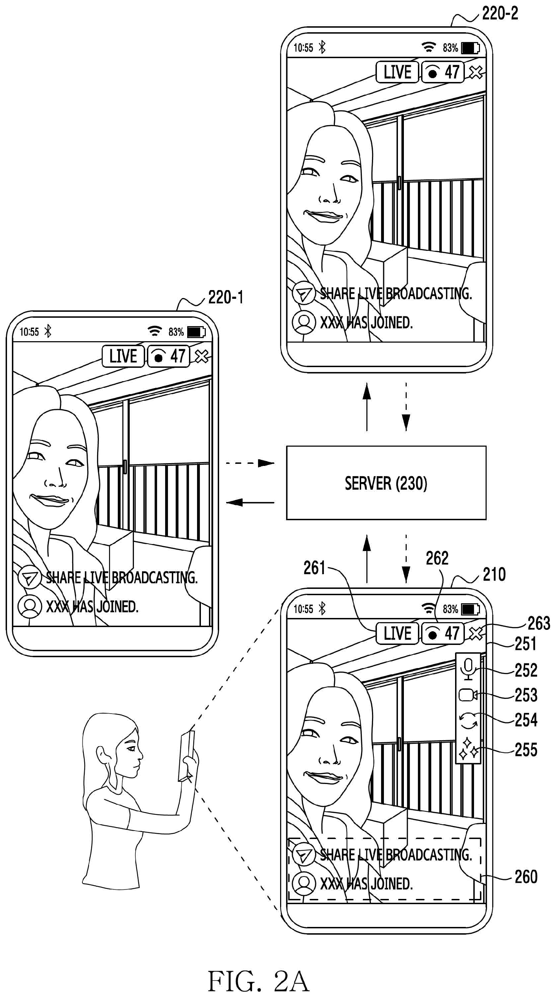

FIG. 2A illustrates an example of operations of an electronic device, at least one external electronic device, and a server when a call connection between the electronic device and the at least one external electronic device is performed for broadcasting of an audio signal or a video signal.

Referring to FIG. 2A, an electronic device 210 may obtain an audio signal and/or a video signal from a user. The electronic device 210 may transmit the obtained audio signal and/or video signal to at least one external electronic device 220 through a server 230. The electronic device 210 may obtain an audio signal and/or a video signal obtained in the at least one external electronic device 220 through the server 230.

According to an embodiment, the server 230 may be used to establish a connection between the electronic device 210 and the at least one external electronic device 220. For example, the electronic device 210 may establish a call connection with the at least one external electronic device 220 through the server 230.

For example, the server 230 may provide a call service by using voice over internet protocol (VoIP). The server 230 may receive a message for the call connection from the electronic device 210. The server 230 may provide a path for the call connection based on the received message. When a call target is an external electronic device 220-1, the server 230 may provide a path for a call connection between the electronic device 210 and the external electronic device 220-1. For example, when a call target is not designated, such as live broadcasting, it may provide a path for the call connection, such that the at least one external electronic device 220 is connectable to the electronic device 210.

According to an embodiment, the at least one external electronic device 220 may output the audio signal and/or the video signal obtained in the electronic device 210 by using a software application for the call connection. For example, each of the at least one external electronic device 220 may receive, from the server 230, the audio signal and/or the video signal obtained in the electronic device 210. Each of the at least one external electronic device 220 may provide the received audio signal and/or video signal through an interface of the software application.

For example, when the call connection between the electronic device 210 and the at least one external electronic device 220 is established, the electronic device 210 may receive the audio signal obtained in the at least one external electronic device 220. By using the call connection between the electronic device 210 and the at least one external electronic device 220, the electronic device 210 may output a first audio signal received from the at least one external electronic device 220 by using a speaker. While the first audio signal is output through the speaker, the electronic device 210 may obtain a second audio signal from the user of the electronic device 210 (or a second audio signal caused by the user) by using a microphone. While the second audio signal is obtained, the first audio signal output through the speaker may also be obtained through the microphone. The electronic device 210 may perform a function for echo cancellation in order to remove the first audio signal.

For example, the electronic device 210 may perform a function for noise cancellation. The electronic device 210 may remove noise included in the second audio signal through the function for noise cancellation.

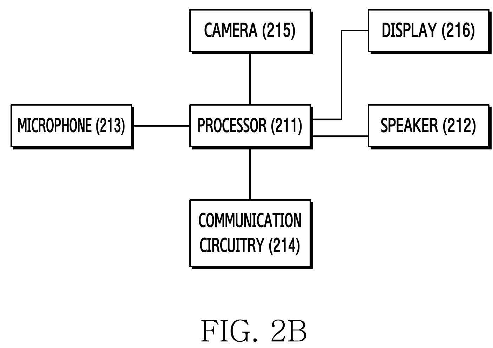

According to an embodiment, the user may perform live broadcasting. The electronic device 210 may provide a service related to the live broadcasting through a software application. The electronic device 210 may display, through a display (e.g., a display 216 of FIG. 2B), a user interface 251 related to the software application for the live broadcasting. The user of the electronic device 210 may change setting information for the live broadcasting by using at least one object included in the user interface 251. For example, the user interface 251 may include an object 252 for blocking an outgoing sound, an object 253 for blocking screen transmission, an object 254 for switching a capturing direction of a camera (or switching the camera), and/or an object 255 for setting a background effect.

For example, the user interface 251 may include an area 260 for displaying a notification message. For example, the notification message may be used for displaying text data received from the at least one external electronic device 220. For example, the notification message may represent that the call connection is established for broadcasting of an audio signal and/or a video signal to the at least one external electronic device 220.

For example, at least one user related to the at least one external electronic device 220 may express an opinion and/or an emotion through text. The electronic device 210 may transmit a video signal captured by the user of the electronic device 210 and/or an audio signal recorded by the user of the electronic device 210 to the at least one external electronic device 220. For example, the area 260 may be referred to as a chatting window.

For example, the user interface 251 may include an object 261 representing that the live broadcasting is being performed. The user interface 251 may include an object 262 representing the number of the at least one external electronic device 220 to which the audio signal and/or the video signal obtained in the electronic device 210 is transmitted. The object 262 may represent the number of users viewing the live broadcasting. The user interface 251 may include an object 253 for terminating the live broadcasting.

According to an embodiment, the call connection may be established for the broadcasting (or live broadcasting) of the audio signal and/or the video signal obtained in the electronic device 210. When the electronic device 210 broadcasts the audio signal and/or video signal, the electronic device 210 may transmit the audio signal and/or video signal to the server 230. However, the electronic device 210 may not receive an audio signal and/or a video signal from the server 230. For example, when a live broadcasting transmission service is provided in the electronic device 210, the audio signal and/or the video signal related to the user who is a subject of the live broadcasting may be transmitted to the at least one external electronic device 220 through the server 230.

On the other hand, the at least one external electronic device 220 may provide a live broadcasting reception service. For example, the external electronic device 220-1 (or an external electronic device 220-2) may not obtain an audio signal and/or a video signal from a user of the external electronic device 220-1 (or the external electronic device 220-2). The external electronic device 220-1 may not transmit the audio signal and/or the video signal to the server 230. The electronic device 210 may not receive the audio signal and/or the video signal obtained in the at least one external electronic device 220.

For example, when the audio signal and/or the video signal obtained in the at least one external electronic device 220 is not received, the electronic device 210 may deactivate the function for echo cancellation. The electronic device 210 may reduce power consumption of the electronic device 210 by deactivating the function for echo cancellation. In the following specification, when the audio signal and/or the video signal obtained in the at least one external electronic device 220 is not received, a specific operation of the electronic device 210 for deactivating the function for echo cancellation will be described. The same reference numerals described in the following specification may represent the same description.

FIG. 2B is a simplified block diagram of an electronic device according to an embodiment.

Referring to FIG. 2B, an electronic device 210 may include a processor 211, a speaker 212, a microphone 213, communication circuitry 214, a camera 215, and/or a display 216. According to an embodiment, the electronic device 210 may include at least one of the processor 211, the speaker 212, the microphone 213, the communication circuitry 214, the camera 215, or the display 216. For example, at least a portion of the processor 211, the speaker 212, the microphone 213, the communication circuitry 214, the camera 215, and the display 216 may be omitted according to an embodiment. For example, when a call connection is performed for broadcasting of an audio signal, the electronic device 210 may not include the camera 215 and/or the display 216. The electronic device 210 may include only the processor 211, the speaker 212, the microphone 213, and the communication circuitry 214. For example, when a call connection is performed for broadcasting of an audio signal and a video signal, the electronic device 210 may include all of the processor 211, the speaker 212, the microphone 213, the communication circuitry 214, the camera 215, and the display 216. For example, the electronic device 201 may include at least a portion of the components of the electronic device 101 of FIG. 1. Although not illustrated, the electronic device 201 may include various components in addition to the processor 211, the speaker 212, the microphone 213, the communication circuitry 214, the camera 215, and the display 216.

According to an embodiment, the processor 211 may correspond to the processor 120 of FIG. 1. The processor 211 may be operatively (or operably) coupled with or connected with the speaker 212, the microphone 213, the communication circuitry 214, the camera 215, and the display 216. The processor 211 being operatively coupled with or connected with the speaker 212, the microphone 213, the communication circuitry 214, the camera 215, and the display 216 may mean that the processor 211 may control the speaker 212, the microphone 213, the communication circuitry 214, the camera 215, and the display 216. For example, the speaker 212, the microphone 213, the communication circuitry 214, the camera 215, and the display 216 may be controlled by the processor 211.

Although illustrated based on different blocks, an embodiment is not limited thereto, and a portion of the hardware of FIG. 2B (e.g., at least a portion of the processor 211, the speaker 212, the microphone 213, the communication circuitry 214, the camera 215, and the display 216) may be included in a single integrated circuit, such as a system on a chip (SoC).

According to an embodiment, the processor 211 may include at least one processor. For example, the processor 211 may include a main processor that performs high-performance processing and an auxiliary processor that performs low-power processing.

According to an embodiment, the processor 211 may include a hardware component for processing data based on one or more instructions. The hardware component for processing the data may include, for example, an arithmetic and logic unit (ALU), a field programmable gate array (FPGA), and/or a central processing unit (CPU).

For example, the processor 211 may include an application processor, a supplementary processor (e.g., a sensor hub, a microcontroller unit (MCU)), a central processing unit (CPU), a neural processing unit (NPU), a graphic processing unit (GPU), and/or a processor for IoT (e.g., a processor integrated with a communication module).

According to an embodiment, the electronic device 210 may include the speaker 212. For example, the speaker 212 may be used to output (or provide) a sound. The processor 212 may receive an audio signal received from an external electronic device and output the received audio signal through the speaker 212. For example, the speaker 212 may correspond to the sound output module 155 of FIG. 1.

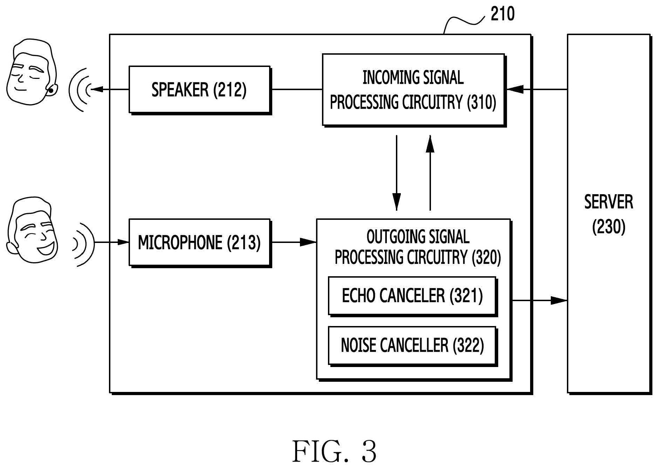

According to an embodiment, the electronic device 210 may include incoming signal processing circuitry (e.g., incoming signal processing circuitry 310 of FIG. 3). For example, the processor 211 may output, through the speaker 212, an audio signal through which an audio signal is processed through incoming signal processing. For example, the incoming signal processing circuitry may be used to process an audio signal received from at least one external electronic device 220. The incoming signal processing circuitry may be used to adjust a tone and/or a volume of the audio signal. For example, the incoming signal processing circuitry may be included in the processor 211. For example, a function related to the incoming signal processing circuitry may be performed in the processor 211. A specific example related to an operation of the incoming signal processing circuitry will be described later in FIG. 3.

According to an embodiment, the electronic device 210 may include the microphone 213. The microphone 213 may identify an electrical signal corresponding to atmospheric vibration. For example, the processor 211 may obtain an audio signal (e.g., a voice of a user) from the user by using the microphone 213. The processor 211 may transmit the audio signal obtained from the user to the at least one external electronic device 220.

According to an embodiment, the electronic device 210 may include outgoing signal processing circuitry (e.g., outgoing signal processing circuitry 320 of FIG. 3). For example, the processor 211 may obtain the audio signal from the user by using the microphone 213. The processor 211 may transmit the obtained audio signal to the at least one external electronic device 220 (or a server 230) by using the outgoing signal processing circuitry. For example, the outgoing signal processing circuitry may be used to process the audio signal to be transmitted to the at least one external electronic device 220. The outgoing signal processing circuitry may be used to adjust a tone and/or volume of the audio signal. For example, the outgoing signal processing circuitry may be included in the processor 211. For example, a function related to the outgoing signal processing circuitry may be performed in the processor 211. A specific example related to an operation of the outgoing signal processing circuitry will be described later in FIG. 3.

According to an embodiment, the electronic device 210 may include the communication circuitry 214. The communication circuitry 214 may correspond to at least a portion of the communication module 190 of FIG. 1. For example, the communication circuitry 214 may be used for various radio access technologies (RATs). For example, the communication circuitry 214 may be used to perform Bluetooth communication, wireless local area network (WLAN) communication, Zigbee communication, near field communication (NFC), ultra wide band (UWB) communication, UWB communication, or ANT+ communication. For example, the communication circuitry 214 may be used to perform cellular communication.

For example, the communication circuitry 214 may be used to establish a connection with the at least one external electronic device 220 through the server 230. The processor 211 may establish, by using the communication circuitry 214, a call connection with the at least one external electronic device 220 through a voice over internet protocol (VoIP) call path provided through the server 230. According to an embodiment, the communication circuitry 214 may be configured to be integrated with the processor 211.

According to an embodiment, the electronic device 210 may include the camera 215. For example, the camera 215 may correspond to at least a portion of the camera module 180 of FIG. 1. For example, the camera 215 may include at least one camera. For example, the camera 215 may include one or more optical sensors (e.g., a charged coupled device (CCD) sensor and a complementary metal oxide semiconductor (CMOS) sensor) that generate an electrical signal representing a color and/or brightness of light. A plurality of optical sensors included in the camera 215 may be disposed in a form of a 2 dimensional array. The camera 215 may obtain an electrical signal of each of the plurality of optical sensors substantially simultaneously and generate 2 dimensional frame data corresponding to light reaching the optical sensors of the 2 dimensional array. For example, picture data captured using the camera 215 may mean a 2 dimensional frame data obtained from the camera 215. For example, video data captured using the camera 215 may mean a sequence of a plurality of 2 dimensional frame data obtained from the camera 215.

According to an embodiment, the electronic device 210 may include the display 216. For example, the display 216 may correspond to the display module 160 of FIG. 1. For example, the display 216 may output visualized information to the user. The display 216 may include a liquid crystal display (LCD), a plasma display panel (PDP), one or more light emitting diodes (LEDs), and/or one or more organic light emitting diodes (OLEDs). The display 216 according to an embodiment may include a sensor (e.g., a touch sensor panel (TSP)) for detecting an external object (e.g., a finger of the user) on the display 216.

FIG. 3 illustrates an example of operations of incoming signal processing circuitry and outgoing signal processing circuitry.

Referring to FIG. 3, a processor 211 of an electronic device 210 may receive, from a server 230, an audio signal obtained in at least one external electronic device 220. The processor 211 may perform processing on the audio signal by using incoming signal processing circuitry 310. For example, the incoming signal processing circuitry 310 may include a gain management unit, a filter, a limiter, and/or a dynamic range control (DRC). The gain management unit may be used to perform tuning related to the audio signal received from the server 230. The filter may be used to identify a designated frequency band (e.g., a frequency band related to a voice signal) in the received audio signal. The limiter may be used to limit an output of an audio signal output through a speaker 212 and/or an audio signal obtained through a microphone 213. The DRC may be used to dynamically change a magnitude of an output audio signal with respect to an input audio signal. The processor 211 may output, through the speaker 212, the audio signal processed through the incoming signal processing circuitry 310. The processor 211 may output an analog signal through the speaker 212.

The processor 211 of the electronic device 210 may obtain, through the microphone 213, an audio signal obtained in surroundings of the electronic device 210. The processor 211 may obtain an analog signal through the microphone 213. For example, the obtained audio signal may include an audio signal related to an utterance of a user of the electronic device 210. For example, the electronic device 210 may perform processing on the audio signal obtained in the electronic device 210. For example, processing on the audio signal may be performed by using outgoing signal processing circuitry 320. For example, the outgoing signal processing circuitry 320 may include an echo canceler 321 and/or a noise canceller 322. Although not illustrated, the outgoing signal processing circuitry 320 may further include a gain management unit, a filter, a limiter, and/or a dynamic range control (DRC).

As an example, the echo canceler 321 may be used to remove, among the audio signal obtained through the microphone 213, the audio signal output through the speaker 212. The echo canceler 321 may identify the audio signal obtained in the at least one external electronic device 220 from the incoming signal processing circuitry 310. The echo canceler 321 may identify, among the audio signal obtained through the microphone 213, a portion related to the audio signal obtained in the at least one external electronic device 220. The echo canceler 321 may remove, among the audio signal obtained through the microphone 213, the portion (or echo) related to the audio signal obtained in the at least one external electronic device 220.

As an example, the noise canceller 322 may be used to remove noise among the audio signal obtained through the microphone 213. Since the microphone 213 obtains the audio signal in the surroundings of the electronic device 210, the obtained audio signal may include noise. Therefore, the processor 211 may remove noise included in the audio signal by using the noise canceller 322.

For example, the processor 211 may change setting information on the echo canceler 321 and the noise canceller 322 by changing a parameter related to the echo canceler 321 and the noise canceller 322. The parameter related to the echo canceler 321 and the noise canceller 322 may be referred to as an echo canceler and noise suppressor (ECNS) parameter.

For example, when a function for echo cancellation is activated, echo (or at least a portion of echo) may be removed from an audio signal through the echo canceler 321. When the function for echo cancellation is deactivated, echo may not be removed from an audio signal through the echo canceler 321. In the following specification, when echo is removed from the audio signal through the echo canceler 321, the function for echo cancellation will be described as being activated. The function for echo cancellation may be referred to as a function for echo reduction. A function for noise cancellation may be referred to as a function for noise reduction.

For example, when the function for noise cancellation is activated, noise (or at least a portion of noise) may be removed from an audio signal through the noise canceller 322. When the function for noise cancellation is deactivated, noise may not be removed from an audio signal through the noise canceller 322. In the following specification, when noise is removed from the audio signal through the noise canceller 322, the function for noise cancellation will be described as being activated.

The processor 211 may transmit the audio signal processed through the outgoing signal processing circuitry 320 to the server 230. The server 230 may transmit the received audio signal to the at least one external electronic device 220. For example, the server 230 may transmit the audio signal received from the electronic device 210 to the at least one external electronic device 220 by using a path (e.g., a VoIP call path) for a generated (or established) call connection.

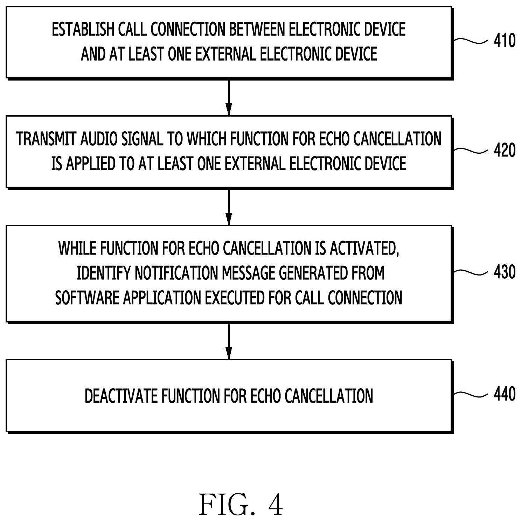

FIG. 4 is a flowchart related to an operation of an electronic device for deactivation of a function for echo cancellation.

Referring to FIG. 4, in operation 410, a processor 211 of an electronic device 210 may establish a call connection between the electronic device 210 and at least one external electronic device 220. For example, the processor 211 may establish, through a server 230, the call connection between the electronic device 210 and the at least one external electronic device 220.

For example, the call connection may be established for broadcasting of an audio signal obtained in the electronic device 210. The audio signal may be transmitted to the at least one external electronic device 220 through the server 230. For example, the call connection may be established for transmission of live broadcasting performed in the electronic device 210.

For example, the processor 211 may request the server 230 for the call connection for the broadcasting of the audio signal. The server 230 may establish a call connection network for the broadcasting of the audio signal. The server 230 may identify a request for receiving the the broadcasting received from the at least one external electronic device 220. The server 230 may establish a path for the call connection between the electronic device 210 and the at least one external electronic device 220 based on the request.

In operation 420, the processor 211 may transmit an audio signal to which a function for echo cancellation is applied to the at least one external electronic device 220. For example, the processor 211 may activate the function for echo cancellation based on the call connection between the electronic device 210 and the at least one external electronic device 220 being established. The processor 211 may activate not only the function for echo cancellation but also a function for noise cancellation based on the call connection between the electronic device 210 and the at least one external electronic device 220 being established.

For example, the processor 211 may obtain an audio signal related to a user of the electronic device 210 by using a microphone 213. The audio signal may include a voice of the user, a sound caused by the user, and/or a sound recorded by the user.

For example, the processor 211 may apply the function for echo cancellation to the audio signal obtained by using the microphone 213. The processor 211 may transmit the audio signal to which the function for echo cancellation is applied to the at least one external electronic device 220 through the server 230. As an example, the processor 211 may apply the function for echo cancellation to the audio signal obtained by using the microphone 213 based on the audio signal received from the server 230. The processor 211 may apply the function for echo cancellation to the audio signal obtained by using the microphone 213 by excluding a portion related to the audio signal received from the server 230 from the audio signal obtained by using the microphone 213.

For example, the processor 211 may apply the function for echo cancellation and the function for noise cancellation to the obtained audio signal. The processor 211 may transmit the audio signal to which the function for echo cancellation and the function for noise cancellation are applied to the at least one external electronic device 220 through the server 230.

In operation 430, the processor 211 may identify a notification message generated from a software application executed for the call connection while the function for echo cancellation is activated.

For example, the software application may be used to provide a service for broadcasting of an audio signal and/or a video signal. The software application may be used to provide a live broadcasting service. The software application may be used to provide a service for simultaneously transmitting an audio signal and/or a video signal to the at least one external electronic device 220.

For example, the notification message may represent that the call connection is established for the broadcasting of the audio signal and/or the video signal from the at least one external electronic device 220. As an example, the processor 211 may identify the notification message provided through the software application.

As an example, the processor 211 may identify the notification message representing that the call connection is established for the broadcasting of the audio signal and/or the video signal in a user interface related to the software application. The notification message may include an object representing that live broadcasting is being performed. The notification message may represent a notification related to a function associated with the live broadcasting (e.g., a live broadcasting address sharing function, a live broadcasting invitation function, and/or a live broadcasting termination function).

As an example, the processor 211 may include a notification message for displaying text data received from one of the at least one external electronic device 220. The notification message may be used for displaying the text data received from one of the at least one external electronic device 220. One of the at least one external electronic device 220 may transmit the text data to the electronic device 210 through the server 230. Based on receiving the text data, the electronic device 210 may display the text data in an area for displaying the notification message in the user interface related to the software application. The notification message may be referred to as a chat message.

According to an embodiment, the processor 211 may identify that a designated notification message is provided to the user through the software application. For example, the processor 211 may identify that a notification message representing an entrance notification of an external user for the live broadcasting is displayed in the user interface related to the software application. For example, while the audio signal obtained in the electronic device 210 is transmitted to the at least one external electronic device 220 (or the server 230), the processor 211 may identify that a chat message is displayed in the user interface related to the software application.

In operation 440, the processor 211 may deactivate the function for echo cancellation. For example, the processor 211 may deactivate the function for echo cancellation based on identifying the notification message.

According to an embodiment, based on identifying the notification message, the processor 211 may identify that the call connection with the at least one external electronic device 220 is established for the broadcasting of the audio signal and/or the video signal to the at least one external electronic device 220. Based on identifying the notification message, The processor 211 may identify that the call connection with the at least one external electronic device 220 is established for transmission of the live broadcasting.

For example, when the live broadcasting is transmitted in the electronic device 210, the processor 211 may not receive an audio signal from the at least one external electronic device 220 (or the server 230). Since the audio signal is not received from the at least one external electronic device 220 (or the server 230), the audio signal may not be output through the speaker 212 of the electronic device 210. Therefore, the function for echo cancellation may not be required. The processor 211 may deactivate the function for echo cancellation. The processor 211 may not apply the function for echo cancellation to the audio signal obtained through the microphone 213. For example, the processor 211 may set an operation mode of the electronic device 210 related to the call connection to an operation mode in which the function for echo cancellation is deactivated. As the function for echo cancellation is deactivated, power consumption of the electronic device 210 may be reduced. For example, the operation mode in which the function for echo cancellation is deactivated may be referred to as a power saving mode. On the other hand, an operation mode in which the function for echo cancellation is activated may be referred to as a default mode.

According to an embodiment, even when the function for echo cancellation is deactivated, the processor 211 may obtain the audio signal by using the microphone 213 and transmit the obtained audio signal to the at least one external electronic device 220. The processor 211 may apply the function for noise cancellation to the audio signal obtained by using the microphone 213. The processor 211 may allocate additional resources for the function for noise cancellation based on deactivating the function for echo cancellation. For example, in a state in which the function for echo cancellation is activated, the processor 211 may allocate a first resource to the function for echo cancellation and allocate a second resource to the function for noise cancellation. The first resource may mean a resource related to hardware (e.g., the processor 211 and/or memory) or software allocated for the function for echo cancellation. The second resource may mean a resource related to hardware (e.g., the processor 211 and/or memory) or software allocated for the function for noise cancellation.

The processor 211 may cease allocation of the first resource based on deactivating the function for echo cancellation. The processor 211 may additionally allocate at least a portion of the first resource for the function for noise cancellation. The processor 211 may perform the function for noise cancellation through the second resource and at least a portion of the first resource based on deactivating the function for echo cancellation. The processor 211 may increase a length of a period of an audio signal for noise cancellation by allocating the additional resources for the function for noise cancellation. Based on an audio signal of a first period, the processor 211 may identify a noise signal related to the audio signal and remove the noise signal from the audio signal. As the additional resources for the function for noise cancellation are allocated, the processor 211 may identify the noise signal related to the audio signal based on an audio signal of a second period longer than the first period. The processor 211 may remove the noise signal for the audio signal.

When the noise signal is identified based on the audio signal of the second period longer than the first period, the noise signal may be identified more accurately. Therefore, performance of the function for noise cancellation may be improved.

In FIG. 4, it has been described that the operation of deactivating the function for echo cancellation is performed based on identifying the notification message, but it is not limited thereto. According to an embodiment, the processor 211 may deactivate the function for echo cancellation based on execution of an application. When live broadcasting is transmitted through the application, the processor 210 may deactivate the function for echo cancellation related to the live broadcasting.

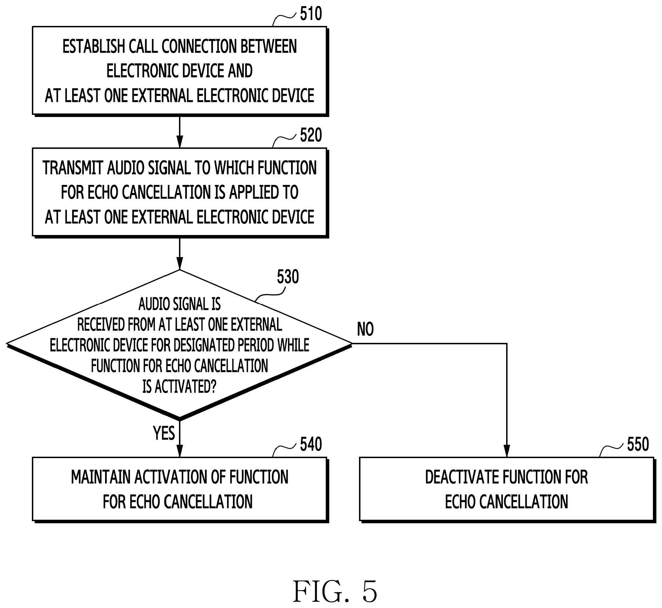

FIG. 5 is a flowchart related to an operation of an electronic device for deactivation of a function for echo cancellation.

Referring to FIG. 5, in operation 510, a processor 211 may establish a call connection between an electronic device 210 and at least one external electronic device 220. The operation 510 may correspond to the operation 410 of FIG. 4.

In operation 520, the processor 211 may transmit an audio signal to which a function for echo cancellation is applied to the at least one external electronic device 220. The operation 520 may correspond to the operation 420 of FIG. 4.

In operation 530, the processor 211 may identify whether an audio signal is received from the at least one external electronic device 220 for a designated period while the function for echo cancellation is activated.

For example, the processor 211 may identify whether the audio signal is received from the at least one external electronic device 220 for the designated period in order to identify whether the call connection is established for broadcasting of an audio signal and/or a video signal.

In operation 540, when the audio signal is received from the at least one external electronic device 220 for the designated period, the processor 211 may maintain activation of the function for echo cancellation. For example, based on identifying that the audio signal is received from the at least one external electronic device 220 for a designated time, the processor 211 may maintain activation of the function for echo cancellation.

For example, when the audio signal is received from the at least one external electronic device 220 for the designated period, the processor 211 may identify that the call connection is not established for transmission of live broadcasting. The processor 211 may maintain activation of the function for echo cancellation.

For example, when the audio signal is received from the at least one external electronic device 220 for the designated period, the processor 211 may identify that an audio signal obtained in the at least one external electronic device 220 is output together through a speaker 212 simultaneously with transmission of the live broadcasting. As an example, a software application may provide a service in which the electronic device 210 and an external electronic device 220-1 transmit live broadcasting together. While providing a service for transmission of live broadcasting in the electronic device 210, the processor 211 may identify that live broadcasting of the external electronic device 220-1 is also transmitted together. Based on the electronic device 210 and the external electronic device 220-1 transmitting live broadcasting together, the processor 211 may maintain activation of the function for echo cancellation.

In operation 550, when the audio signal is not received from the at least one external electronic device 220 for the designated period, the processor 211 may deactivate the function for echo cancellation. For example, based on identifying that the audio signal is not received from the at least one external electronic device 220 for the designated time, the processor 211 may deactivate the function for echo cancellation. The operation 550 may correspond to the operation 440 of FIG. 4.

For example, when the audio signal is not received from the at least one external electronic device 220 for the designated period, the processor 211 may identify that the call connection is established for transmission of live broadcasting. The processor 211 may deactivate the function for echo cancellation.

Although not illustrated, even when the audio signal is received from the at least one external electronic device 220, the audio signal may not be output through the speaker 212. Even when the audio signal is received from the at least one external electronic device 220, in a case that the audio signal is not output through the speaker 212, the processor 211 may deactivate the function for echo cancellation.

For example, the electronic device 210 may be in a state of being connected with a wearable device (e.g., earphones or earbuds) for outputting an audio signal. The processor 211 may output the audio signal through the wearable device. When the audio signal is output through the wearable device, a signal output through the wearable device may not be obtained through a microphone 213. Therefore, even when the audio signal is received from the at least one external electronic device 220, the processor 211 may deactivate the function for echo cancellation based on the audio signal being output through the wearable device connected with the electronic device 210.

For example, even when receiving the audio signal from the at least one external electronic device 220, the electronic device 210 may not output the audio signal through the speaker 212 based on setting information of the software application. The processor 211 may set muting for the audio signal received from the at least one external electronic device 220. When muting for the audio signal received from the at least one external electronic device 220 is set, the processor 211 may not output the audio signal through the speaker 212. Therefore, when muting for the audio signal received from the at least one external electronic device 220 is set, the processor 211 may deactivate the function for echo cancellation.

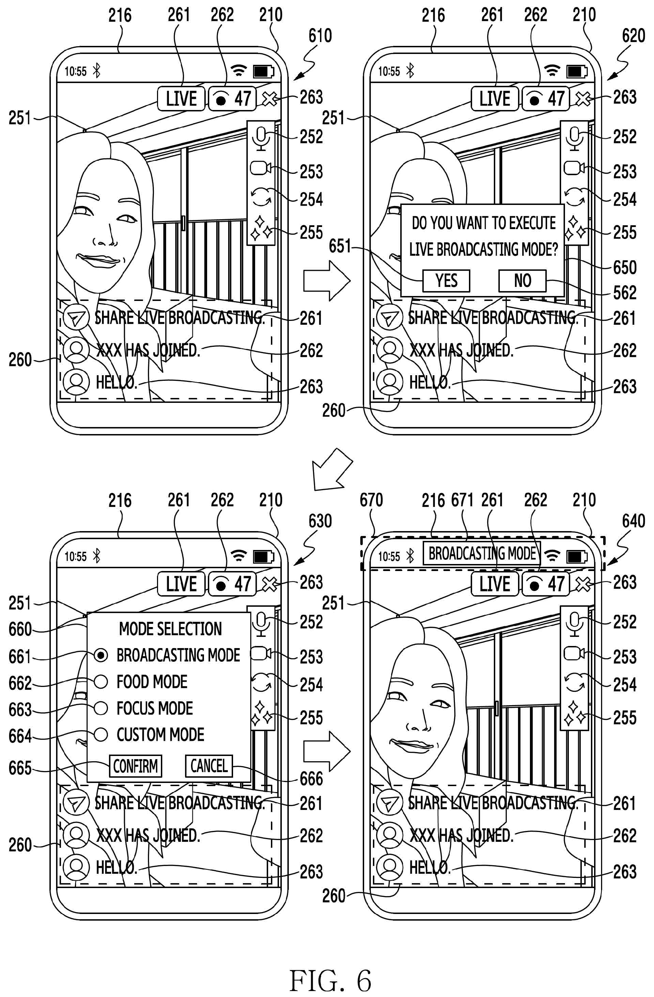

FIG. 6 illustrates an operation of an electronic device for deactivation of a function for echo cancellation.

Referring to FIG. 6, in a state 610, an electronic device 210 may provide a service related to live broadcasting through a software application. A processor 211 may display, through a display 216, a user interface 251 related to a software application for a call connection. The user interface 251 may display at least one object for changing setting information for the live broadcasting. For example, the user interface 251 may include an object 252 for blocking an outgoing sound, an object 253 for blocking screen transmission, an object 254 for switching a direction of a camera, and/or an object 255 for setting a background effect.

For example, the user interface 251 may include an area 260 for displaying notification messages 261, 262, and 263. For example, the notification message 263 may be used for displaying text data received from at least one external electronic device 220. For example, the notification messages 261 and 262 may represent that the call connection is established for broadcasting of an audio signal and/or a video signal to the at least one external electronic device 220. Based on the notification messages 261, 262, and 263, the processor 211 may identify that the call connection is established for live broadcasting (or broadcasting of the audio signal). For example, the area 260 may be referred to as a chatting window.

For example, the user interface 251 may include an object 261 representing that the live broadcasting is being performed. The user interface 251 may include an object 262 representing the number of the at least one external electronic device 220 to which the audio signal and/or the video signal obtained in the electronic device 210 is transmitted. The object 262 may represent the number of users viewing the live broadcasting. The user interface 251 may include an object 253 for terminating the live broadcasting.

According to an embodiment, based on identifying at least one of a plurality of notification messages generated from the software application, the processor 211 may change a state of the electronic device 210 from the state 610 to a state 620. For example, based on at least one of the notification message 261, the notification message 262, and/or the notification message 263, the processor 211 may change the state of the electronic device 210 from the state 610 to the state 620.

According to an embodiment, the processor 211 may identify whether an audio signal is received from the at least one external electronic device 220 for a designated period (e.g., 1 minute or 3 minutes). For example, based on identifying that the audio signal is not received from the at least one external electronic device 220 for the designated period, the processor 211 may change the state of the electronic device 210 from the state 610 to the state 620. For example, based on identifying that the audio signal is received from the at least one external electronic device 220 for the designated period, the processor 211 may maintain the state of the electronic device 210 in the state 610. Based on identifying that the audio signal is received from the at least one external electronic device 220 for the designated period, the processor 211 may maintain activation of a function for echo cancellation.

In a state 620, the processor 211 may display, through the display 216, a visual object 650 for representing whether the function for echo cancellation is to be deactivated, superimposed on the user interface 251 (or a screen) related to the software application.

For example, the visual object 650 may be displayed in a form of a popup window. The visual object 650 may include an object 651 for deactivating the function for echo cancellation and an object 652 for maintaining activation of the function for echo cancellation. Although not illustrated, when the function for echo cancellation is deactivated, the visual object 650 may include text representing that battery consumption of the electronic device 210 is reduced. When the function for echo cancellation is deactivated through the visual object 650, the processor 211 may provide a notification representing that battery consumption is reduced.

For example, the processor 211 may maintain activation of the function for echo cancellation based on an input for the visual object 652. The processor 211 may deactivate the function for echo cancellation based on an input for the visual object 651. The processor 211 may change the state of the electronic device 210 from the state 620 to a state 630 in response to the input for the visual object 651.

In the state 630, the processor 211 may display a visual object 660 for deactivating the function for echo cancellation and setting intensity related to a function for noise cancellation, superimposed on the user interface 251 (or the screen) related to the software application.

For example, the visual object 660 may be displayed in a form of a popup window. The visual object 660 may include at least one element 661, 662, 663, and 664 for deactivating the function for echo cancellation and setting the intensity related to the function for noise cancellation.

For example, the visual object 660 may display the element 661 for setting an operation mode of the electronic device 210 to a first operation mode (e.g., a broadcasting mode). In the first operation mode, the function for echo cancellation may be deactivated, and the intensity related to the function for noise cancellation may be set to default intensity.

For example, the visual object 660 may display the element 662 for setting the operation mode of the electronic device 210 to a second operation mode (e.g., a food mode). In the second operation mode, the function for echo cancellation may be deactivated, and the intensity related to the function for noise cancellation may be set to intensity lower than the default intensity.

For example, the visual object 660 may display the element 663 for setting the operation mode of the electronic device 210 to a third operation mode (e.g., a focus mode). In the third operation mode, the function for echo cancellation may be deactivated, and the intensity related to the function for noise cancellation may be set to intensity higher than the default intensity.

For example, the visual object 660 may display the element 663 for setting the operation mode of the electronic device 210 to a fourth operation mode (e.g., a custom mode). A user of the electronic device 210 may set the fourth operation mode. Whether each of the function for echo cancellation and/or the function for noise cancellation is activated and intensity thereof may be set by the user of the electronic device 210. The fourth operation mode in which whether each of the function for echo cancellation and/or the function for noise cancellation is activated and the intensity thereof are set by the user of the electronic device 210 may be designated.

For example, the processor 211 may identify selecting (or an input for) the element 661 to the element 664, and set the operation mode of the electronic device 210 to an operation mode according to the selected element based on identifying an input for a visual object 665. In response to identifying the input for the visual object 665, the processor 211 may change the state of the electronic device 210 from the state 630 to a state 640. For example, in response to identifying an input for a visual object 666, the processor 211 may maintain activation of the function for echo cancellation.

Although not illustrated, the processor 211 may display, on the visual object 660, information on battery consumption according to each of the first operation mode to the fourth operation mode. For example, as the intensity for the function for noise cancellation increases, battery consumption may increase. The processor 211 may provide a notification indicating that the second operation mode among the first operation mode to the third operation mode has the lowest battery consumption. The processor 211 may provide a notification indicating that the third operation mode among the first operation mode to the third operation mode has the highest battery consumption.

In the state 640, the processor 211 may display, in an area 670 for representing setting information related to the electronic device 210, an object 671 for representing the operation mode of the electronic device 210 set according to the element 661 to the element 664. For example, the object 671 may represent that the function for echo cancellation is deactivated.

In the state 640, an example in which the object 671 is displayed in the area 670 is illustrated, but it is not limited thereto. For example, the object 671 may be displayed superimposed on the user interface 251 of the software application. For example, the object 671 may be displayed on at least a portion of the user interface 251.

Although not illustrated, while the operation mode of the electronic device is set to one of the first operation mode to the fourth operation mode, the processor 211 may receive an audio signal from the at least one external electronic device 220 (or one of the at least one external electronic device 220) through a server 230. Based on receiving the audio signal from the at least one external electronic device 220 (or one of the at least one external electronic device 220), the processor 211 may set the operation mode of the electronic device 210 to a default mode. For example, while the function for echo cancellation is deactivated, the processor 211 may receive the audio signal from the at least one external electronic device 220 (or one of the at least one external electronic device 220) through the server 230. Based on receiving the audio signal from the at least one external electronic device 220 (or one of the at least one external electronic device 220), the processor 211 may activate the function for echo cancellation. For example, based on receiving the audio signal from the at least one external electronic device 220 (or one of the at least one external electronic device 220), the processor 211 may change the state of the electronic device 210 from the state 640 to the state 610.

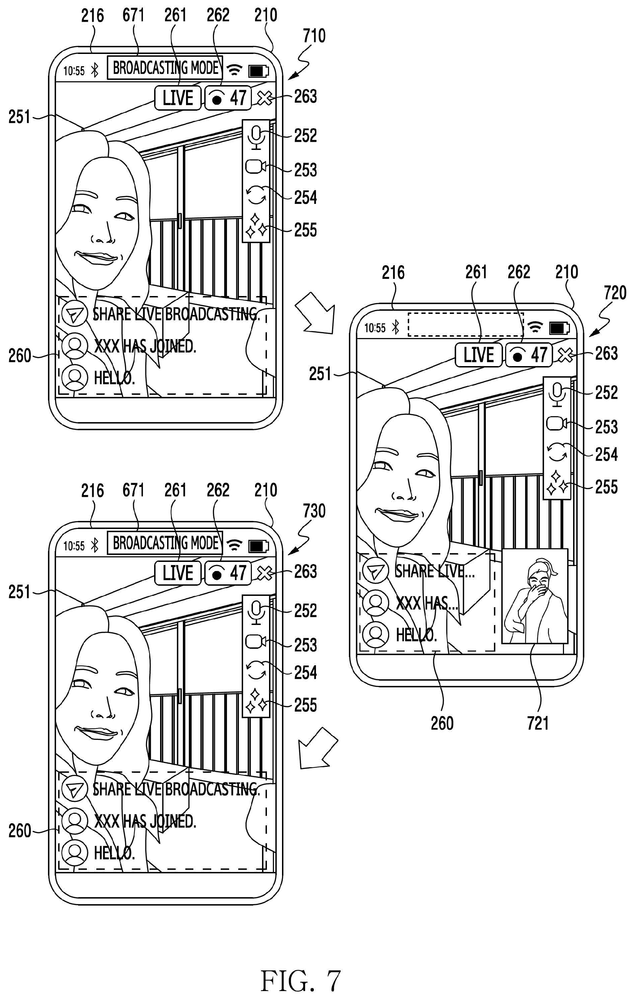

FIG. 7 illustrates an operation of an electronic device for deactivation of a function for echo cancellation.

Referring to FIG. 7, in a state 710, an electronic device 210 may provide a service related to live broadcasting through a software application. A processor 211 may display, through a display 216, a user interface 251 related to a software application for a call connection. The user interface 251 may display at least one object for changing setting information for the live broadcasting. For example, the user interface 251 may include an object 252 for blocking an outgoing sound, an object 253 for blocking screen transmission, an object 254 for switching a direction of a camera, and/or an object 255 for setting a background effect. For example, the user interface 251 may include an area 260 for displaying a notification message.

For example, the user interface 251 may include an object 261 representing that the live broadcasting is being performed. The user interface 251 may include an object 262 representing the number of the at least one external electronic device 220 to which the audio signal and/or the video signal obtained in the electronic device 210 is transmitted. The object 262 may represent the number of users viewing the live broadcasting. The user interface 251 may include an object 253 for terminating the live broadcasting.

According to an embodiment, the processor 211 may set an operation mode of the electronic device 210 to a first operation mode while a transmission operation of live broadcasting is performed in the electronic device 210. For example, the first operation mode may correspond to the first operation mode related to the element 661 of FIG. 6. The first operation mode may be referred to as a broadcasting mode. The processor 211 may display an object 671 for representing the operation mode of the electronic device 210. For example, the object 671 may represent that the operation mode of the electronic device 210 is the first operation mode. The object 671 may represent that a function for echo cancellation is deactivated.

According to an embodiment, the software application may provide a service for conducting live broadcasting together with another user during the live broadcasting. The processor 211 may request an external electronic device 220-1 for an invitation to the live broadcasting. Based on the external electronic device 220-1 responding to the invitation to the live broadcasting, the processor 211 may change a state of the electronic device 210 from the state 710 to a state 720.

In the state 720, the processor 211 may provide, in an area 721 of the user interface 251 of the software application, broadcasting content according to an audio signal and/or a video signal obtained in the external electronic device 220-1. The processor 211 may obtain, through a server 230, the audio signal and/or the video signal obtained in the external electronic device 220-1. The processor 211 may provide the broadcasting content based on the obtained audio signal and/or video signal. Therefore, the processor 211 may provide together broadcasting content according to an audio signal and/or a video signal obtained in the electronic device 210 and the broadcasting content according to the audio signal and/or the video signal obtained in the external electronic device 220-1.

For example, when the broadcasting content according to the audio signal and/or the video signal obtained in the electronic device 210 and the broadcasting content according to the audio signal and/or the video signal obtained in the external electronic device 220-1 are provided together, the processor 211 may output, through a speaker 212, the audio signal obtained in the external electronic device 220-1.

The processor 211 may obtain, through a microphone 213, an audio signal caused by a user of the electronic device 210 (hereinafter, a first audio signal). The processor 211 may obtain, through the microphone 213, an audio signal output through the speaker 212 (hereinafter, a second audio signal). Therefore, the processor 211 may obtain the first audio signal and the second audio signal through the microphone 213. The processor 211 may reactivate the function for echo cancellation in order to remove the second audio signal. Based on obtaining the audio signal and/or the video signal obtained in the external electronic device 220-1, the processor 211 may activate the function for echo cancellation. In response to activating the function for echo cancellation, the processor 211 may not display the object 671.

According to an embodiment, the processor 211 may identify that providing of the broadcasting content according to the audio signal and/or video signal obtained in the external electronic device 220-1 is ceased. Based on identifying that providing of the broadcasting content according to the audio signal and/or the video signal obtained in the external electronic device 220-1 is ceased, the processor 211 may change the state of the electronic device 210 from the state 720 to a state 730.

In the state 730, since the providing of the broadcasting content according to the audio signal and/or the video signal obtained in the external electronic device 220-1 is ceased, the processor 211 may not receive the audio signal and/or the video signal from the external electronic device 220-1. Therefore, the processor 211 may deactivate the function for echo cancellation again. The processor 211 may set the operation mode of the electronic device 210 to the first operation mode. The processor 211 may display the object 671 for representing that the operation mode of the electronic device 210 is the first operation mode. The processor 211 may display the object 671 for representing that the function for echo cancellation is deactivated. The state 730 may correspond to the state 710.

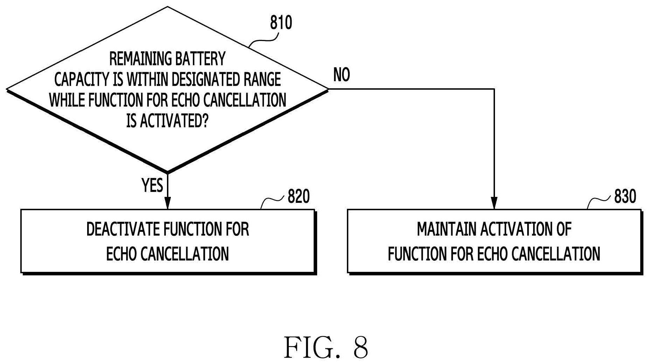

FIG. 8 is a flowchart related to an operation of an electronic device for deactivation of a function for echo cancellation.

Referring to FIG. 8, in operation 810, a processor 211 may identify whether remaining battery capacity of a battery of an electronic device 210 is within a designated range while a function for echo cancellation is activated. For example, the processor 211 may identify whether the remaining battery capacity of the battery is less than designated remaining capacity. For example, while the function for echo cancellation is activated, the processor 211 may allocate resources for the function for echo cancellation. The processor 211 may identify whether the remaining battery capacity is within the designated range in order to determine whether to release the allocated resources.

In operation 820, when the remaining battery capacity is within the designated range while the function for echo cancellation is activated, the processor 211 may deactivate a function for echo reduction. For example, based on identifying that the remaining battery capacity is within the designated range while the function for echo cancellation is activated, the processor 211 may deactivate the function for echo reduction. The processor 211 may deactivate the function for echo reduction in order to reduce battery consumption. The processor 211 may deactivate the function for echo reduction by releasing resources allocated for the function for echo reduction.

In operation 830, when the remaining battery capacity is not within the designated range while the function for echo cancellation is activated, the processor 211 may maintain activation of the function for echo cancellation. For example, based on identifying that the remaining battery capacity is not within the designated range while the function for echo cancellation is activated, the processor 211 may maintain activation of the function for echo reduction.

According to an embodiment, an electronic device (e.g., an electronic device 210) may comprise a speaker (e.g., a speaker 212), a microphone (e.g., a microphone 213), communication circuitry (e.g., communication circuitry 214), memory comprising one or more storage media storing instructions, and at least one processor (e.g., a processor 211) comprising processing circuitry. The instructions, when executed by the at least one processor individually or collectively, may cause the electronic device to establish, through the communication circuitry, a call connection between the electronic device and at least one external electronic device. The instructions, when executed by the at least one processor individually or collectively, may cause the electronic device to, while the call connection is established, transmit, based on obtaining an audio signal from the microphone, the audio signal to which a function for echo cancellation is applied to the at least one external electronic device through the communication circuitry. The instructions, when executed by the at least one processor individually or collectively, may cause the electronic device to, while the function for echo cancellation is activated, identify a notification message generated from a software application executed for the call connection. The instructions, when executed by the at least one processor individually or collectively, may cause the electronic device to, based on identifying the notification message, deactivate the function for echo cancellation.

According to an embodiment, the notification message may be used for displaying text data received from one of the at least one external electronic device.

According to an embodiment, the notification message may represent that the call connection is established for broadcasting of the audio signal to the at least one external electronic device.

According to an embodiment, the instructions, when executed by the at least one processor individually or collectively, may cause the electronic device to, based on deactivating the function for echo cancellation, allocate additional resources for a function for noise cancellation.

According to an embodiment, the electronic device may comprise a display (e.g., a display 216), and a camera (e.g., a camera 215). The call connection may be established for transmitting a video signal obtained through the camera with the audio signal to the at least one external electronic device through the communication circuitry.

According to an embodiment, the instructions, when executed by the at least one processor individually or collectively, may cause the electronic device to, in response to identifying the notification message, display, through the display, a visual object for representing whether the function for echo cancellation is to be deactivated, superimposed on a screen for the software application.

According to an embodiment, the visual object may comprise at least one element for setting intensity related to the function for noise cancellation.

According to an embodiment, the instructions, when executed by the at least one processor individually or collectively, may cause the electronic device to identify that an audio signal is not received from the at least one external electronic device for a designated period while the function for echo cancellation is activated. The instructions, when executed by the at least one processor individually or collectively, may cause the electronic device to, based on identifying that the audio signal is not received from the at least one external electronic device for the designated period, deactivate the function for echo cancellation.

According to an embodiment, the instructions, when executed by the at least one processor individually or collectively, may cause the electronic device to identify that an audio signal is received from one of the at least one external electronic device while the function for echo cancellation is deactivated. The instructions, when executed by the at least one processor individually or collectively, may cause the electronic device to, based on the audio signal received from one of the at least one external electronic device, activate the function for echo cancellation.

According to an embodiment, the electronic device may comprise a battery. The instructions, when executed by the at least one processor individually or collectively, may cause the electronic device to, while the function for echo cancellation is activated, identify that remaining battery capacity of the battery is within a designated range. The instructions, when executed by the at least one processor individually or collectively, may cause the electronic device to, based on identifying that the remaining battery capacity of the battery is within the designated range, deactivate the function for echo cancellation.

According to an embodiment, a method performed by an electronic device may comprise establishing, through communication circuitry of the electronic device, a call connection between the electronic device and at least one external electronic device. The method may comprise, while the call connection is established, transmitting, based on obtaining an audio signal from a microphone of the electronic device, the audio signal to which a function for echo cancellation is applied to the at least one external electronic device through the communication circuitry. The method may comprise, while the function for echo cancellation is activated, identifying a notification message generated from a software application executed for the call connection. The method may comprise, based on identifying the notification message, deactivating the function for echo cancellation.

According to an embodiment, the notification message may be used for displaying text data received from one of the at least one external electronic device.

According to an embodiment, the notification message may represent that the call connection is established for broadcasting of the audio signal to the at least one external electronic device.

According to an embodiment, the method may comprise, based on deactivating the function for echo cancellation, allocating additional resources for a function for noise cancellation.

According to an embodiment, the call connection may be established for transmitting a video signal obtained through a camera of the electronic device with the audio signal to the at least one external electronic device through the communication circuitry.

According to an embodiment, the method may comprise, in response to identifying the notification message, displaying, through a display of the electronic device, a visual object for representing whether the function for echo cancellation is to be deactivated, superimposed on a screen for the software application.

According to an embodiment, the visual object may comprise at least one element for setting intensity related to the function for noise cancellation.

According to an embodiment, the method may comprise identifying that an audio signal is not received from the at least one external electronic device for a designated period while the function for echo cancellation is activated. The method may comprise, based on identifying that the audio signal is not received from the at least one external electronic device for the designated period, deactivating the function for echo cancellation.

According to an embodiment, the method may comprise identifying that an audio signal is received from one of the at least one external electronic device while the function for echo cancellation is deactivated. The method may comprise, based on the audio signal received from one of the at least one external electronic device, activating the function for echo cancellation.

According to an embodiment, a non-transitory computer readable storage medium may store one or more programs. The one or more programs may comprise instructions which, when executed by at least one processor of an electronic device with a speaker, a microphone, and communication circuitry, cause the electronic device to establish, through the communication circuitry, a call connection between the electronic device and at least one external electronic device. The one or more programs may comprise instructions which, when executed by the processor, cause the electronic device to, while the call connection is established, transmit, based on obtaining an audio signal from the microphone, the audio signal to which a function for echo cancellation is applied to the at least one external electronic device through the communication circuitry. The one or more programs may comprise instructions which, when executed by the processor, cause the electronic device to, while the function for echo cancellation is activated, identify a notification message generated from a software application executed for the call connection. The one or more programs may comprise instructions which, when executed by the processor, cause the electronic device to, based on identifying the notification message, deactivate the function for echo cancellation.

According to the above-described embodiment, when transmission of live broadcasting is performed in the electronic device, unnecessary waste of resources may be prevented by deactivating the function for echo cancellation. The electronic device may release the resources allocated to the function for echo cancellation. As the resources allocated to the function for echo cancellation are released, current consumption and heat generation may be reduced. In addition, a time during which the call connection is maintained may be increased. According to an embodiment, the electronic device may improve performance of the function for noise cancellation by additionally allocating the resources for the function for noise cancellation.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a speaker;
a microphone;
communication circuitry;
memory comprising one or more storage media storing instructions; and
at least one processor comprising processing circuitry,
wherein the instructions, when executed by the at least one processor individually or collectively, cause the electronic device to:
establish, through the communication circuitry, a call connection between the electronic device and at least one external electronic device,
while the call connection is established, transmit, based on obtaining an audio signal from the microphone, the audio signal to which a function for echo cancellation is applied to the at least one external electronic device through the communication circuitry,
while the function for echo cancellation is activated, identify a notification message generated from a software application executed for the call connection, and
based on identifying the notification message, deactivate the function for echo cancellation.

2. The electronic device of claim 1, wherein the notification message is used for displaying text data received from one of the at least one external electronic device.

3. The electronic device of claim 1, wherein the notification message represents that the call connection is established for broadcasting of the audio signal to the at least one external electronic device.

4. The electronic device of claim 1, wherein the instructions, when executed by the at least one processor individually or collectively, further cause the electronic device to, based on deactivating the function for echo cancellation, allocate additional resources for a function for noise cancellation.

5. The electronic device of claim 1, wherein the electronic device further comprises:
a display; and
a camera, and
wherein the call connection is established for transmitting a video signal obtained from the camera with the audio signal to the at least one external electronic device through the communication circuitry.

6. The electronic device of claim 5, wherein the instructions, when executed by the at least one processor individually or collectively, further cause the electronic device to, in response to identifying the notification message, display, through the display, a visual object for representing whether the function for echo cancellation is to be deactivated, superimposed on a screen for the software application.

7. The electronic device of claim 6, wherein the visual object comprises at least one element for setting intensity related to the function for noise cancellation.

8. The electronic device of claim 1, wherein the instructions, when executed by the at least one processor individually or collectively, further cause the electronic device to,
identify that an audio signal is not received from the at least one external electronic device for a designated period while the function for echo cancellation is activated, and
based on identifying that the audio signal is not received from the at least one external electronic device for the designated period, deactivate the function for echo cancellation.

9. The electronic device of claim 8, wherein the instructions, when executed by the at least one processor individually or collectively, further cause the electronic device to,
identify that an audio signal is received from one of the at least one external electronic device while the function for echo cancellation is deactivated, and
based on the audio signal received from one of the at least one external electronic device, activate the function for echo cancellation.

10. The electronic device of claim 1, wherein the electronic device further comprises a battery, and
wherein the instructions, when executed by the at least one processor individually or collectively, further cause the electronic device to,
while the function for echo cancellation is activated, identify that remaining battery capacity of the battery is within a designated range, and
based on identifying that the remaining battery capacity of the battery is within the designated range, deactivate the function for echo cancellation.

11. A method performed by an electronic device, comprising:
establishing, through communication circuitry of the electronic device, a call connection between the electronic device and at least one external electronic device,
while the call connection is established, transmitting, based on obtaining an audio signal from a microphone of the electronic device, the audio signal to which a function for echo cancellation is applied to the at least one external electronic device through the communication circuitry,
while the function for echo cancellation is activated, identifying a notification message generated from a software application executed for the call connection, and
based on identifying the notification message, deactivating the function for echo cancellation.

12. The method of claim 11, wherein the notification message is used for displaying text data received from one of the at least one external electronic device.

13. The method of claim 11, wherein the notification message represents that the call connection is established for broadcasting of the audio signal to the at least one external electronic device.

14. The method of claim 11, wherein the method further comprises, based on deactivating the function for echo cancellation, allocating additional resources for a function for noise cancellation.

15. A non-transitory computer readable storage medium storing one or more programs, the one or more programs comprise instructions, which, when executed by a processor of an electronic device with a speaker, a microphone, and communication circuitry, cause the electronic device to:
establish, through the communication circuitry, a call connection between the electronic device and at least one external electronic device,
while the call connection is established, transmit, based on obtaining an audio signal from the microphone, the audio signal to which a function for echo cancellation is applied to the at least one external electronic device through the communication circuitry,
while the function for echo cancellation is activated, identify a notification message generated from a software application executed for the call connection, and
based on identifying the notification message, deactivate the function for echo cancellation.
